# NEUE EUROPÄISCHE PATENTSCHRIFT

(11) **EP 0 564 434 B2**
(45) Veröffentlichungstag und Bekanntmachung des Hinweises auf die Entscheidung über den Einspruch: **28.08.2002**
(45) Hinweis auf die Patenterteilung: 01.10.1997
(21) Anmeldenummer: 93890035.4
(22) Anmeldetag: 02.03.1993
(51) Int. Cl.: B09B 1/00

(54) **Anordnung und Verfahren zur Geruchsstabilisierung von Deponien**
Arrangement and procedure for the odour stabilisation of waste dumps
Agencement et procédure pour la stabilisation de l'odeur de décharges

(30) Priorität: 03.03.1992 AT 40392
(43) Veröffentlichungstag der Anmeldung: 06.10.1993
(73) Patentinhaber: TECHNISCHES BÜRO ING. REINHARD GÖSCHL, 2824 Seebenstein (AT)
(72) Erfinder: Göschl, Reinhard, Ing., A-2824 Seebenstein, N.Ö. (AT)
(74) Vertreter: Pinter, Rudolf, Dipl.-Ing.

(56) Entgegenhaltungen:
- WO-A-90/03232
- AT-B- 359 532
- DE-A- 3 535 328
- DE-A- 3 605 042
- DE-A- 3 739 126
- DE-A- 3 830 177
- DE-C- 3 246 711
- DE-C- 3 920 827
- US-A- 4 410 349
- "Expo Wien: K.o.-Schlag gegen die Altlast", a3-umWelt 3-4/91, Seiten 22-24

## Beschreibung

Die Erfindung bezieht sich auf eine Anordnung bzw. ein Verfahren zur Geruchsstabilisierung von Deponien nach dem Oberbegriff der Ansprüche 1 bzw. 2.

Bisher werden Deponien nach der Verfüllung luft- und wasserdicht abgeschlossen und durch sogenannte Saugschächte die entstehenden Gase abgesaugt und verbrannt. Die Gase entstehen durch mikrobiologischen Abbau unter anaeroben Verhältnissen, sodaß hauptsächlich Methan und entsprechende Begleitgase entstehen. Der Deponiekörper befindet sich im sauren Bereich, wobei sich durch den Gärprozess neben der Gasproduktion auch noch üble Gerüche ausbilden.

Da in zunehmendem Maß die Aufarbeitung von Altdeponien notwendig wird, müssen Altdeponien, bevor sie geöffnet, geruchstabilisiert werden, wobei dazu die anaeroben Verhältnisse in aerobe Verhältnisse umgewandelt werden müssen.

Es ist dabei bereits bekannt, zur Sanierung bzw. Geruchstabilisierung von Deponien sauerstoffhaltiges Gas über Lanzen in die Deponie einzublasen. In diesem Zusammenhang ist eine Anordnung bzw. ein Verfahren der eingangs genannten Art bekannt, bei welcher bzw. welchem durch zwangsweise, gegebenenfalls auch in Stoßwellen, Einführung von Luft, gegebenenfalls mit Sauerstoff angereichert, die ursprünglich vorliegende anaerobe Fermentation in eine aerobe Fermentation umgeleitet wird. Durch bedarfsweise Zufuhr von Fermentations-Mikroorganismen über die Gaszufuhrleitungen und/oder Gasabzugsleitungen ist ein Impfprozess möglich, durch den z.B. bei lang in anaerober Fermentation befindlichen Deponien oder auch bei Deponien, in welchen durch zu starke exotherme Fermentation die Mikroorganismen abgetötet wurden, eine erneute Fermentation durchgeführt werden kann. Die abgesaugten Deponiegase können über ein Biofilter mit im Humus vorhandenen Mikroorganismen an die Umwelt abgegeben werden, wobei eine weitere Geruchstabilisierung der abgesaugten Gase stattfindet (siehe dazu beispielsweise die vor dem Prioritätstag der vorliegenden Anmeldung eingereichte aber nachveröffentlichte AT 395.859 B, welche zusammengestellt an anderer Stelle vorveröffentlichten entsprechenden Stand der Technik beschreibt). Diese Verfahren haben den Nachteil, daß das sauerstoffhaltige Gas bei dem Durchtritt durch die Deponie Kanäle ausbildet, durch welche dann das Gas auf schnellem Wege wieder austritt, ohne eine Umwandlung der Deponie von den anaeroben Verhältnissen zu den aeroben Verhältnissen zu bewirken.

Der Erfindung liegt die Aufgabe zugrunde, eine zuverlässige Umwandlung des gesamten Deponiebereiches von dem anaeroben zu dem aeroben Zustand der Deponie durchzuführen.

Erfindungsgemäß wird diese Aufgabe bei einer Einrichtung bzw. einem Verfahren der eingangs genannten Art durch die Merkmale der kennzeichnenden Teile von Anspruch 1 bzw. 2 gelöst.

Dadurch, daß das sauerstoffhaltige Gas durch ein in Verrottung befindliches biologisches Material hindurchgesaugt wird, wird die Luft auf ca. 50-60 °C erwärmt und mit Wasserdampf gesättigt. Außerdem wird die Luft mit organischen Bakterien angereichert, die im aeroben Bereich ihr Wachstumsoptimum haben. Diese Bakterien werden dann in die Deponie eingebracht und können dort die Geruchstabilisierung bzw. Umwandlung des Deponiematerials vornehmen. Durch das Ausblasen des Deponiegases durch das in Verrottung befindliche biologische Material wird eine Filterung des Deponiegases erreicht, sodaß das Deponiegas von unangenehmen Gerüchen befreit aus dem nachgeschalteten Behälter austritt.

Zwischen dem in Verrottung befindliches biologisches Material enthaltenden Behälter und der Lanze kann eine Saug-Druck-Pumpe zwischengeschaltet sein, wodurch einerseits das Durchsaugen der Luft durch das in Verrottung befindliche Material bzw. bei den anderen Lanzen durch das Deponiematerial und das Drücken in einem Fall durch das Deponiematerial und im anderen Fall durch das in Verrottung befindliche biologische Material durch ein und dieselbe Pumpe erzielt wird.

Die Fließrichtung des sauerstoffhaltigen Gases zwischen den Lanzen ist umkehrbar, was den Vorteil hat, daß durch den Wechsel der Luftrichtung eine Verhinderung der Kanalbildung bewirkt wird, sodaß alle Bereiche des Deponiekörpers entsprechend belüftet werden.

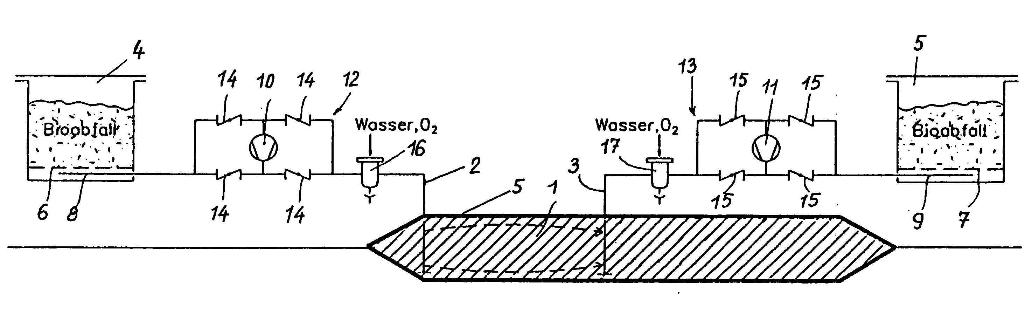

In der Zeichnung ist ein Ausführungsbeispiel des Erfindungsgegenstandes schematisch dargestellt.

Mit 1 ist der Deponiekörper bezeichnet, in welchen Lanzen 2, 3 eingebracht sind. Die Lanze 2 dient im vorliegenden Fall zum Einbringen von sauerstoffhaltigem Gas, welches in Richtung der strichliert eingezeichneten Pfeile zu der Sonde 3 strömt, mittels welcher das Deponiegas abgesaugt wird. Der Deponiekörper 1 ist dabei mit einer Dichtung 5 abgedichtet, sodaß das Gas zuverlässig innerhalb des Deponiekörpers strömt. Der Sonde zum Einblasen von sauerstoffhaltigem Gas, vorliegend die Sonde 2, ist ein Behälter 4 vorgeschaltet, welcher in Verrottung befindliches biologisches Material enthält. Ein analoger Behälter 5 ist der Sonde 3 nachgeschaltet. Beide Behälter sind gleich ausgebildet und weisen einen gasdurchlässigen Boden 6, 7 auf, wobei unterhalb dieses Bodens eine Leitung 8, 9 einmündet, über welche Gas abgesaugt bzw. Gas eingebracht werden kann. Zum Absaugen bzw. Einbringen des Gases ist zwischen dem Behälter 4 und der Sonde 2 eine Pumpe 10 eingeschaltet und zwischen der Sonde 3 und dem Behälter 5 eine Pumpe 11. Diese Pumpen sind als Saug-Druck-Pumpen ausgebildet, sodaß auf einer Seite Gas angesaugt und auf der anderen Seite das angesaugte Gas unter Druck hinausbefördert werden kann. Die Pumpen 10, 11 sind in entsprechenden Kreisläufen 12, 13 eingeschaltet, in welchen über Klappen 14, 15 die Durchflußrichtung des Gases, das durch die Pumpe 10 bzw. 11 gefördert wird, umgekehrt werden kann. Zwischen den Pumpen 10, 11 und den Sonden 2, 3 sind Konditioniereinrichtungen 16, 17 zwischengeschaltet, mittels welcher dem in die Deponie einzublasenden sauerstoffhaltigen Gas zusätzlich noch Wasser und Sauerstoff zugesetzt werden kann, um solcherart die Luft optimal für die Umwandlung des Deponiematerials zu konditionieren.

Für den Betrieb der erfindungsgemäßen Anordnung werden Sauglanzen 2 in einem gegenseitigen Abstand bis maximal 2 m durch das Abdichtmaterial 5 des Deponiekörpers 1 in das Deponiematerial bis zu dessen Boden eingesetzt. In etwa 8 - 10 m Entfernung von den Lanzen 2 werden Sauglanzen 3 gleichfalls in einem gegenseitigen Abstand von maximal 2 m in das Deponiematerial durch die Dichtung 5 hindurch eingebracht. Danach wird die Pumpe 10 eingeschaltet und die Klappen 14 des Kreislaufes 12 so gesteuert, daß Luft über die Leitung 8 aus dem Behälter 4 durch das in Verrottung befindliche biologische Material hindurch angesaugt und in die Sonden 2 eingeblasen wird. Wie angeführt, kann gegebenenfalls über die Konditioniereinrichtung 16 dem Luftstrom zusätzlich noch Wasser und Sauerstoff zugesetzt werden, um die nötigen Konzentrationen in dem einzubringenden Gas zu erzielen. Durch dieses Durchsaugen der Luft durch das Material des Behälters 4 wird die Luft auf etwa 50 - 60° erwärmt und mit Wasserdampf gesättigt. Außerdem wird noch biologisches Material, wie aerobe Bakterienmasse, mitgerissen und in das Deponiematerial eingeblasen. Das über die Lanzen 2 eingeblasene sauerstoffhältige Gas geht in Richtung der strichlierten Pfeile zu den Sonden 3, über welche es mittels der Pumpe 11 abgesaugt wird. Dabei sind die Klappen 15 des Kreises 13 so geschaltet, daß die Luft aus der Sonde 3 in die Leitung 9 hineingedrückt wird. Das abgesaugte Deponiegas tritt nun aus der Leitung 9 in den Behälter 5 unterhalb des gelochten Bodens 7 ein und durchströmt das in Verrottung befindliche biologische Material des Behälters 5, wodurch einerseits eine Adsorption der üblen Gerüche der Deponiegase erfolgt und anderseits aufgrund des mitgerissenen Bakterienmaterials der Abbau innerhalb des Behälters 5 beschleunigt wird. Nach etwa 6 - 8 Stunden Betrieb wird die Fließrichtung im Deponiekörper umgedreht, d.h. daß die Klappen 15 des Kreises 13 so umgesteuert werden, daß die Pumpe 11 über die Leitung 9 Luft durch das Material des Behälters 5 ansaugt und über die Lanze 3 in den Deponiekörper einbläst, und gleichzeitig werden die Klappen 14 des Kreises 12 so umgesteuert, daß die Pumpe 10 über die Sonde 2 das Gas aus dem Deponiekörper absaugt und über die Leitung 8 in den Behälter 4 einbläst. Diese Umkehr der Fließrichtung bewirkt, daß sich etwa ausgebildete Kanäle innerhalb des Deponiematerials aufgrund der gegenläufigen Strömung wieder verlegen, sodaß alle Bereiche des Deponiematerials von dem sauerstoffhältigen Gas zuverlässig durchströmt sind.

## Patentansprüche

1. Anordnung zur Geruchsstabilisierung einer abgeschlossenen, anaeroben Deponie, mit einer Einrichtung zur Zufuhr von organischen Bakterien, welche im aeroben Bereich ihr Wachstumsoptimum haben, in die Deponie und mit Lanzen zum Einblasen eines sauerstoffhaltigen Gases über eine Druckpumpe, wobei zusätzlich zu den Lanzen zum Einblasen des sauerstoffhältigen Gases Lanzen zum Absaugen von Deponiegas vorgesehen sind, denen eine Saug-Pumpe und ein in Verrottung befindliches biologisches Material enthaltender Behälter nachgeschaltet ist, **dadurch gekennzeichnet, daß** als Einrichtung zur Zufuhr der organischen Bakterien zufuhrseitig ebenfalls ein in Verrottung befindliches biologisches Material enthaltender Behälter eingeschaltet ist, über den die organischen Bakterien während des Durchströmens des sauerstoffhaltigen Gases in dieses einbringbar sind, und daß die Fließrichtung des Gases zwischen den Lanzen durch Umschaltung von Druck- bzw. Saugpumpe periodisch umkehrbar ist.

2. Verfahren zur Geruchsstabilisierung einer abgeschlossenen anaeroben Deponie, bei welchem, jeweils über Lanzen in die Deponie organische Bakterien, welche im aeroben Bereich ihr Wachstumsoptimum haben, eingebracht, sauerstoffhaltiges Gas eingeblasen, und Deponiegas abgesaugt und über einen in Verrottung befindliches Material enthaltenden Behälter abgeleitet wird, **dadurch gekennzeichnet, daß** das sauerstoffhaltige Gas zufuhrseitig ebenfalls über einen in Verrottung befindliches Material enthaltenden Behälter geführt wird, über den die organischen Bakterien während des Durchströmens des sauerstoffhaltigen Gases in dieses eingebracht werden, und daß die Fließrichtung des zu- bzw. abgeführten Gases periodisch umgekehrt wird.

## Claims

1. Arrangement for stabilising the odours from a closed-off anaerobic body of refuse with a device for supplying organic bacteria which have a growth optimum in the aerobic region, into the refuse and with lances for blowing in an oxygen-containing gas through a pressure pump, lances for sucking off waste gas being provided in addition to the lances for blowing in the oxygen-containing gas and being followed by a suction pump and a vessel containing biological material present in decay, **characterised in that** as a device for supplying the organic bacteria on the feed-in side likewise there is incorporated a vessel containing biological material present in decay, through which the organic bacteria can be introduced into it during the flow through it of the oxygen-containing gas, and thats the direction of flow of the gas between the lances is periodically reversible by switching over pressure and suction pumps.

2. Procedure for stabilising odours from a closed-off anaerobic body of refuse, in which, in each case through lances, organic bacteria having their growth optimum in the aerobic region are introduced into the refuse, oxygen-containing gas is blown in and refuse gas is sucked off and conducted through a vessel containing material present in decay, **characterised in that** the oxygen-containing gas on the feed-in side is likewise conducted via a vessel containing material present in decay, by which the organic bacteria are introduced into this vessel as the oxygen-containing gas flows through it, and that the direction of flow of the gas fed in and sucked off is periodically reversed.

## Revendications

1. Agencement pour la stabilisation de l'odeur d'une décharge fermée et anaérobie, avec un dispositif pour l'introduction dans la décharge de bactéries organiques, qui présentent leur optimum de croissance en zone aérobie, et avec des lances pour l'introduction par soufflage d'un gaz contenant de l'oxygène par l'intermédiaire d'une pompe de refoulement, dans lequel, outre les lances pour l'introduction par soufflage d'un gaz renfermant de l'oxygène, sont prévues des lances qui aspirent le gaz provenant de la décharge, et qui sont suivies en aval d'une pompe d'aspiration et d'un récipient contenant du matériau biologique en cours de décomposition,
**caractérisé en ce que**, comme dispositif pour l'introduction de bactéries organiques à l'entrée, on utilise également un récipient contenant du matériau biologique en cours de décomposition et au moyen duquel les bactéries organiques sont susceptibles d'être introduites dans le gaz, pendant l'écoulement du gaz renfermant de l'oxygène, et **en ce que** la direction d'écoulement du gaz entre les lances est susceptible d'être périodiquement inversée par permutation ou commutation de la pompe de refoulement et de la pompe d'aspiration.

2. Procédé pour la stabilisation de l'odeur d'une décharge anaérobie et fermée, dans lequel, à chaque fois à travers des lances, on introduit, dans la décharge, des bactéries organiques présentant leur optimum de croissance en zone aérobie, on refoule dans la décharge du gaz contenant de' l'oxygène, on aspire le gaz de la décharge et on le fait passer par un récipient contenant du matériau en cours de décomposition,
**caractérisé en ce qu'**on fait passer le gaz contenant de l'oxygène du côté introduction, également par un récipient qui contient du matériau en cours de décomposition et par l'intermédiaire duquel on introduit les bactéries organiques pendant l'écoulement dans ce récipient du gaz renfermant de l'oxygène, et **en ce que** l'on inverse périodiquement la direction d'écoulement du gaz refoulé, ou respectivement, extrait.
